# EUROPEAN PATENT SPECIFICATION

(11) **EP 4 477 677 B1**
(45) Date of publication and mention of the grant of the patent: **28.01.2026**
(21) Application number: 24171435.1
(22) Date of filing: 19.04.2024
(51) Int. Cl.: C08F 8/00, C08F 8/42, C08J 5/18, H01M 10/052, H01M 50/403, H01M 50/406, H01M 50/417, H01M 50/489, H01M 50/494, H01M 50/491

(54) **MODIFIED POLYPROPYLENE AND A PREPARATION METHOD THEREFOR, A SEPARATOR AND A PREPARATION METHOD THEREFOR, AND A LITHIUM-SULFUR BATTERY**
MODIFIZIERTES POLYPROPYLEN UND HERSTELLUNGSVERFAHREN DAFÜR, SEPARATOR UND HERSTELLUNGSVERFAHREN DAFÜR SOWIE LITHIUM-SCHWEFEL-BATTERIE
POLYPROPYLÈNE MODIFIÉ ET SON PROCÉDÉ DE PRÉPARATION, SÉPARATEUR ET SON PROCÉDÉ DE PRÉPARATION, ET BATTERIE AU LITHIUM-SOUFRE

(30) Priority: 12.06.2023 CN 202310690740
(43) Date of publication of application: 18.12.2024
(73) Proprietor: Jiangsu Zenergy Battery Technologies Group Co., Ltd., Suzhou City, Jiangsu 215500 (CN)
(72) Inventor: ZHUANG, Sidong, Changshu Suzhou City, 215500 (CN); WEI, Lei, Changshu Suzhou City, 215500 (CN); HE, Xingxing, Changshu Suzhou City, 215500 (CN)
(74) Representative: Novagraaf Group

(56) References cited:
- CN-A- 114 094 176
- YANG MAO ET AL: "Interfacial engineering of polypropylene separator with outstanding high-temperature stability for highly safe and stable lithium-sulfur batteries", ELECTROCHEMISTRY COMMUNICATIONS, ELSEVIER AMSTERDAM, NL, vol. 125, 23 February 2021 (2021-02-23), XP086536345, ISSN: 1388-2481, [retrieved on 20210223], DOI: 10.1016/J.ELECOM.2021.106971
- LUC GINESTE JEAN ET AL: "Polypropylene separator grafted with hydrophilic monomers for lithium batteries", 1 January 1995 (1995-01-01), pages 154 - 164, XP093216975, Retrieved from the Internet <URL:https://www.sciencedirect.com/science/article/pii/037673889500112P>
- CHOI SEONG-HO ET AL: "Introduction of carboxylic acid group to polypropylene fabric for battery separator", KOREAN JOURNAL OF CHEMICAL ENGINEERING, vol. 16, no. 4, 1 July 1999 (1999-07-01), New York, pages 505 - 510, XP093216981, ISSN: 0256-1115, DOI: 10.1007/BF02698276
- CHEN LIN ET AL: "Surface tailoring of polypropylene separators for lithium-ion batteries via N-hydroxyphthalimide catalysis", EUROPEAN POLYMER JOURNAL, PERGAMON PRESS LTD OXFORD, GB, vol. 152, 27 April 2021 (2021-04-27), XP086574023, ISSN: 0014-3057, [retrieved on 20210427], DOI: 10.1016/J.EURPOLYMJ.2021.110487

## Description

### Technical Field

The present disclosure relates to the technical field of lithium-sulfur batteries, and in particular, to modified polypropylene and a preparation method therefor, a separator and a preparation method therefor, and a lithium-sulfur battery.

### Background

A lithium-sulfur battery has attracted wide attention due to high theoretical specific capacity (1675 mAh·g⁻¹) and energy density (2600 Wh·kg⁻¹). However, the lithium-sulfur battery also has defects: in the cycling process of the lithium-sulfur battery, lithium polysulfides will be dissolved into an electrolyte, and shuttle back and forth along with pores of the separator, resulting in loss of a sulfur cathode. In order to inhibit shuttling of the polysulfides, currently, researchers mainly prevent the shuttling of lithium polysulfides by coating the separator with a material having an adsorption or catalytic effect on the lithium polysulfides. However, the thickness of such a coating separator is large, which increases the internal resistance of the battery, and is not conducive to improving the electrochemical performance of the lithium-sulfur battery.

YANG MAO ET AL: "Interfacial engineering of polypropylene separator with outstanding high-temperature stability for highly safe and stable lithium-sulfur batteries", ELECTROCHEMISTRY COMMUNICATIONS, ELSEVIER AMSTERDAM, NL, vol. 125, 23 February 2021 (2021-02-23) discloses a polypropylene separator for Li-S battery. A polypyrrole (PPY) modified lithium-montmorillonite (PPY/Li-MMT) can act as a heat release layer to improve the high temperature stability of PP separator as well as the cycling stability of Li-S batteries.

LUC GINESTE JEAN ET AL: "Polypropylene separator grafted with hydrophilic monomers for lithium batteries",JOURNAL OF MEMBRANE SCIENCE, 1 January 1995, discloses a polypropylene grafted with hydrophilic monomers.. such as acrylic acid or diethylene glycol dimethacrylate in the presence of a peroxide. It is used as a separator for lithium batteries

### Summary

A technical problem to be solved of the present disclosure is to provide modified polypropylene, in which Lewis acid monomers are grafted onto molecules of the modified polypropylene, and therefore a separator prepared from the modified polypropylene has a catalytic effect on lithium polysulfides.

The invention is indicated in the appended claims.

Compared with the related art, the present disclosure has the following beneficial effects:
1. In the present disclosure, the polypropylene undergoes a hydrogen elimination reaction under the action of peroxide free radicals to form polypropylene macromolecular free radicals, the polypropylene macromolecular free radicals may undergo a grafting or chain-scission reaction, so that Lewis acid monomers can be grafted onto polypropylene molecules, to form more stable macromolecular free radicals. A separator prepared from the modified polypropylene has a catalytic effect on lithium polysulfides, and thus is suitable for being prepared into a separator of a lithium-sulfur battery, can inhibit "shuttle effect" of polysulfides in the lithium-sulfur battery, and improve the electrochemical performance of the lithium-sulfur battery.
2. In the present disclosure, the Lewis acid selected also has the effect of a catalyst, which enables unsaturated carbon-carbon double bonds contained in the polypropylene molecules to undergo a polyaddition reaction, so as to obtain polypropylene having a high degree of polymerization; therefore, the separator prepared therefrom has good physical performance.
3. Compared with a coating separator in the related art, in the present disclosure, the Lewis acid is grafted onto the polypropylene molecules in a grafting manner, without a subsequent coating step; therefore, the thickness of the separator can be reduced, and the internal resistance of the battery is reduced, facilitating improvement of the electrochemical performance of the lithium-sulfur battery.

### Brief Description of the Drawings

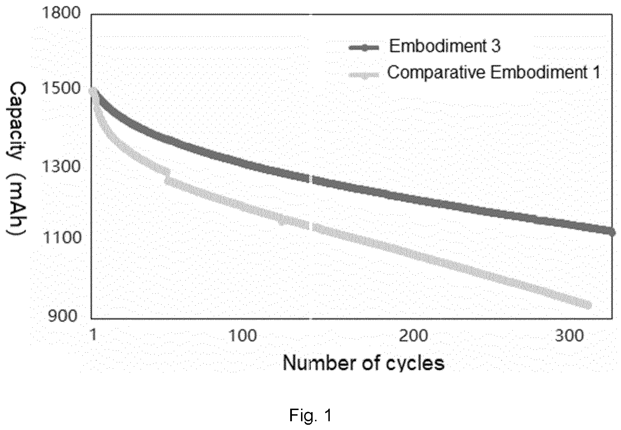

Fig. 1 is a comparison diagram of cycle performance of lithium-sulfur batteries with a functional separator of Embodiment 3 and a conventional separator of Comparative Embodiment 1, with a current of 0.5 C.

### Detailed Description of the Embodiments

Unless otherwise defined, all technical and scientific terms used herein have the same meanings as those commonly understood by a person skilled in the technical field to which the present disclosure belongs. The terms used in the description of the present disclosure are for the purpose of describing particular embodiments only, and are not intended to limit the present disclosure. As used herein, the term "and/or" comprises any and all combinations of one or more associated listed items.

As described in the Background, currently, researchers mainly prevent the shuttling of lithium polysulfides by coating the surface of the separator with a material having an adsorption or catalytic effect on the lithium polysulfides by using a coating method. However, such a coating separator has many disadvantages: for example, a coating step needs to be added in the preparation process of the separator, so that the process is prolonged and the cost is increased; and the prepared separator is thick, which increases the internal resistance of the battery, and is not conducive to improving the electrochemical performance of the battery.

In view of the problems, the inventor grafted Lewis acid monomers capable of adsorbing polysulfides onto polypropylene molecules through a grafting reaction, to obtain modified polypropylene. Therefore, a separator prepared from the modified polypropylene has the function of adsorbing polysulfides, and can reduce the thickness of the separator and reduce the internal resistance of a battery, thereby facilitating improvement of the electrochemical performance of a lithium-sulfur battery.

First, the present disclosure provides a preparation method for modified polypropylene, comprising the following steps:
Dissolving polypropylene in a solvent; and
Adding a Lewis acid and an initiator into the solution in which the polypropylene is dissolved, and then performing a grafting reaction, to obtain the modified polypropylene;
Wherein the Lewis acid is selected from at least one of boron trifluoride diethyl etherate, boron trifluoride methyl ether, boron trifluoride acetic acid and boron trifluoride propionic acid; and the initiator is selected from at least one of tert-butyl benzoyl peroxide and methyl ethyl ketone peroxide.

A process of the reaction above is: first of all, the polypropylene undergoes a hydrogen elimination reaction under the action of peroxide free radicals in the organic peroxide initiator to form polypropylene macromolecular free radicals, the polypropylene macromolecular free radicals may undergo a grafting or chain-scission reaction; then, Lewis acid monomers can be grafted onto the polypropylene molecules through the grafting reaction to form more stable macromolecular free radicals, thereby perfectly combining the polypropylene with the Lewis acid.

In addition, in the reaction process, the Lewis acid added also has a catalytic effect, which enables unsaturated carbon-carbon double bonds contained in the polypropylene molecules to undergo a polyaddition reaction, so as to obtain polypropylene having a high degree of polymerization; therefore, the obtained modified polypropylene has good physical performance.

In the reaction above, the organic peroxide initiator mainly functions to provide peroxide free radicals, and includes at least one of tert-butyl benzoyl peroxide and methyl ethyl ketone peroxide.

In the reaction above, in order to make the prepared separator have good physical performance, polypropylene having a higher molecular weight is preferably used. In some embodiments of the present disclosure, the number-average molecular weight of the polypropylene used is 300,000-500,000, e.g., 300,000, 350,000, 400,000, 450,000, 500,000, etc.

In the reaction above, the solvent can be selected from organic solvents capable of dissolving polypropylene, and is preferably an organic solvent containing a benzene ring functional group in the molecule, and includes but is not limited to at least one of toluene and xylene. In preferred embodiment s of the present disclosure, the solvent is toluene.

In the reaction above, the temperature of the grafting reaction can be controlled to be 110-140°C, for example, 110°C, 115°C, 120°C, 125°C, 130°C, 135°C, 140°C, etc.; and the time of the grafting reaction can be adjusted according to factors such as reaction temperature, addition amounts of raw materials, and can be, for example, 1-3 h.

In the reaction above, the mass ratio of the reaction raw materials, i.e. polypropylene, Lewis acid and initiator is not limited. In some embodiments of the present disclosure, the mass ratio of the polypropylene, the Lewis acid and the initiator is 75-80:20-25:5-8, for example, 75:20:5, 75:25:5, 75:25:8, 80:25:5, etc.

The present disclosure also provides modified polypropylene, which is prepared from the preparation method as described above.

Secondly, some embodiments of the present disclosure further provide a preparation method for a functional separator, specifically comprising the following steps:
S1. melt-mixing the described modified polypropylene and functional additives, and extruding a cast film;
S2. successively performing piece casting and longitudinal stretching on the cast film, to obtain a thin film; and
S3. extracting the thin film by using an extraction agent, and performing drying, to obtain the separator.

The step S1 can be carried out in an extruder, after various functional additives are mixed uniformly, the functional additives and the modified polypropylene are respectively fed into the extruder through feeding ports, heated and melt-mixed, and then extruded to form a cast film

In the step S2, the extruded cast film is firstly processed by a sheet roller and cast into a thick sheet; subsequently, the thick sheet is longitudinally stretched by a preheating roll, a stretching roll and a cooling roll sequentially, to obtain a thin film.

In the step S3, the purity and quality of the separator can be improved by the extraction treatment. The extraction process preferably comprises primary extraction and secondary extraction; the secondary extraction can reduce the problem of excessive saturation degree caused by the primary extraction, thereby solving the problem of incomplete extraction. In some embodiments of the present disclosure, the primary extraction and the secondary extraction are performed by using a first extraction agent and a second extraction agent, respectively. The first extraction agent is a mixture of dichloromethane and phosphate, and the second extraction agent is water.

In some embodiments of the present disclosure, the phosphate includes, but is not limited to, at least one of trimethyl phosphate and triethyl phosphate.

In the present disclosure, the mass ratio of dichloromethane to phosphate in the first extraction agent may be 12:1-38:1, for example, 12:1, 12:4, 12:8, 12:12, 12:20, 12:30, 12:36, 6:36, 4:36, 2:36, 1:36, etc.

In the present disclosure, the functional additives include but are not limited to at least one of an antioxidant, an anti-ultraviolet agent, an antistatic agent and an anti-fogging agent; In some embodiments of the present disclosure, the addition amount of the antioxidant is 4 wt%, the addition amount of the anti-ultraviolet agent is 8 wt%, the addition amount of the antistatic agent is 1 wt%, and the addition amount of the anti-fogging agent is 2 wt%.

Further, the anti-ultraviolet agent may be selected from at least one of salicylates, benzophenones, benzotriazoles, substituted acrylonitriles, triazines and hindered amines; the antistatic agent may be selected from at least one of quaternary ammonium salts and ethoxyalkylated aliphatic alkylamines; and the anti-fogging agent may be selected from at least one of xylitol ester, sorbitol monopalmitate, lauric acid and Span-series surfactants.

The present disclosure also provides a separator, which is prepared by the preparation method for a separator.

Further, in some embodiments of the present disclosure, the prepared separator has a thickness of 10-20 µm, porosity of 35-50%, and air permeability of 300-350 sec/100 mL. The separator has a longitudinal tensile strength of 1450-1850 kgf/cm² and a puncture strength of 300-400 gf.

When applied to a lithium-sulfur battery, the functional separator above has the effect of inhibiting shuttling of polysulfides. A principle thereof is: in the cycling process of the lithium-sulfur battery, sulfur in a cathode material is dissolved out, and forms lithium polysulfides together with lithium, and the lithium polysulfides are dissolved into an electrolyte. When the battery is charged/discharged, the lithium polysulfides shuttle back and forth through the separator, so that the capacity of the lithium-sulfur battery is rapidly attenuated. The lithium polysulfides dissolved in the electrolyte include long-chain lithium polysulfides (Li₂S₈, Li₂S₆ and Li₂S₄) and short-chain lithium polysulfides (Li₂S and Li₂S₂), in which short-chain insulating sulfur (Li₂S and Li₂S₂) has an insulating property, which is a main cause of capacity loss. Moreover, the lithium polysulfides are Lewis bases, which can chemically react with the Lewis acid, and thus when the functional separator in some embodiments of the present disclosure is applied to a lithium-sulfur battery, the Lewis acid grafted in the separator can allow for the insulating sulfur to be reused and return to the battery, so that a cathode active material is reused, thereby improving the utilization rate of sulfur, thereby being able to prepare a lithium-sulfur battery with excellent cycle performance.

Compared with an existing coating separator, the functional separator manufactured by using the described method does not require a coating step, and eliminates a coating binder, labor costs during coating and costs of various coating equipment, thereby achieving the purpose of reducing costs; also, the separator in some embodiments of the present disclosure has a simple preparation process, and is easy to implement industrial production; in addition, the thickness of the separator is also reduced, and the internal resistance of the battery is reduced, facilitating improvement of the electrochemical performance of the battery.

The present disclosure also provides a lithium-sulfur battery, comprising a cathode plate, an anode plate, a separator and an electrolyte, wherein the separator is configured to separate the cathode plate from the anode plate.

In the lithium-sulfur battery, the cathode plate comprises a cathode current collector and a cathode active material layer provided on the cathode current collector. The cathode active material may be a sulfur-containing material such as elemental sulfur, an organic sulfide, a porous carbon/sulfur composite material, a polymer/sulfur composite material, and lithium sulfide. The type of the cathode current collector is not specifically limited, and may be selected according to actual requirements. For example, the cathode current collector may be an aluminum foil, a nickel foil, or a polymer conductive film; preferably, the cathode current collector is an aluminum foil.

In the lithium-sulfur battery, the anode plate comprises an anode current collector and an anode active material layer provided on the anode current collector. The anode active material is selected from lithium metal, a lithium alloy and materials capable of reversibly intercalating or deintercalating lithium ions, and materials capable of reversibly forming lithium-containing compounds by reacting with lithium ions. The lithium alloy may be an alloy of lithium and a metal selected from a group consisting of sodium, potassium, beryllium, magnesium, calcium, barium, aluminum, silicon and tin, for example, a lithium-aluminum alloy, a lithium-magnesium alloy or a lithium-tin alloy. The materials capable of reversibly intercalating or deintercalating lithium ions include crystalline carbon, amorphous carbon, or a mixture thereof; and the materials capable of reversibly forming lithium-containing compounds by reacting with lithium ions include silicon, titanium nitrate, and the like. Preferably, the anode active material is a 100% lithium metal layer coated on the anode current collector. The anode current collector may be selected from, but not limited to, one of a copper foil, a copper mesh, an aluminum foil, foamed nickel, or a stainless steel mesh, and is preferably a copper foil.

The cathode plate and the anode plate may be prepared by using electrode plate preparation processes commonly used in the art. A schematic preparation method is: a cathode active material/an anode active material, a conductive agent and a binder are mixed to prepare a slurry, the slurry is coated on at least one side surface of a cathode current collector/an anode current collector, and drying and tabletting are performed, to obtain a cathode plate/an anode plate.

In the preparation method for an electrode plate, the type and content of the conductive agent are not specifically limited, and can be selected according to actual requirements. In some embodiments, the conductive agent includes at least one of conductive carbon black, carbon nanotubes, acetylene black, graphene, ketjen black, carbon nanofibers, and the like. It should be understood that, without departing from the spirit of the present disclosure, other conductive agents capable of achieving the functions of the present disclosure can be selected according to specific requirements, rather than limited thereto.

In the preparation method for an electrode plate, the type and content of the binder are not specifically limited, and can be selected according to actual requirements. In some embodiments, the binder comprises at least one of polyacrylonitrile, polyvinylidene fluoride, polyvinyl alcohol, sodium carboxymethyl cellulose, polymethacrylamide, polyacrylic acid, sodium polyacrylate, polyacrylamide, polyamide, polyimide, polyacrylate, styrene butadiene rubber, sodium alginate, chitosan, polyethylene glycol, or guar gum and the like.

The electrolyte is formed by dissolving a lithium-containing electrolyte in a non-aqueous organic solvent, and in addition to this, an organic solid electrolyte, an inorganic solid electrolyte, or the like can be used. The lithium-containing electrolyte can be well dissolved in the non-aqueous organic solvent. In exemplary embodiments, the lithium-containing electrolyte may include, but is not limited to, one or more of LiCl, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, lithium chloroborane, lower-aliphatic lithium carboxylate, lithium tetraphenylborate and lithium imide.

The non-aqueous organic solvent needs to well dissolve the lithium-containing electrolyte. In exemplary embodiments, the non-aqueous organic solvent may include, but is not limited to, one or more organic solvents of N-methyl-2-pyrrolidone, propylene carbonate, ethylene carbonate, butylene carbonate, dimethyl carbonate, diethyl carbonate, ethyl methyl carbonate, γ-butyrolactone, ethylene glycol dimethyl ether, 1,3-dioxolane, 1,2-dimethoxyethane, 1,2-diethoxyethane, tetrahydrofuran, 2-methyltetrahydrofuran, dimethyl sulfoxide, 1,3-dioxolane, 4-methyl-1,3-dioxane, diethyl ether, formamide, dimethylformamide, dioxolane, acetonitrile, methyl formate, methyl acetate, triester phosphate, trimethoxymethane, dioxolane derivatives, sulfolane, methyl sulfolane, 1,3-dimethyl-2-imidazolidinone, propylene carbonate derivatives, tetrahydrofuran derivatives, and the like.

In some embodiments, a certain amount of additive may also be added to the electrolyte. The additive may include one or more of vinylene carbonate (VC), vinyl ethylene carbonate (VEC), ethylene sulfate (DTD), ethylene sulfite (ES), methylene methanedisulfonate (MMDS), 1,3-propane sultone (PS), 1,3-propene sultone (PES), trimethylene sulfite (TMS), trimethyl silane phosphate (TMSP), trimethyl silane borate (TMSB), and fluoroethylene carbonate (FEC).

In preferred embodiments, the electrolyte is obtained by dissolving LiTFSI in ethylene glycol dimethyl ether and 1,3-dioxolane at a 1:1 volume ratio.

It should be understood that regarding preparation methods for the cathode, the anode, the separator and the electrolyte in some embodiments of the present disclosure, without departing from the spirit of some embodiments of the present disclosure, other preparation methods capable of achieving the functions of some embodiments of the present disclosure can be selected according to specific requirements, rather than limited thereto. In some embodiments of a method for manufacturing a lithium-sulfur battery, the preparation method comprises: the anode plate and the cathode plate are die-cut, tabs are welded, and then the anode plate, the cathode plate and the tabs are laminated with a separator, encapsulation and liquid injection are performed, and then formation and capacity division are performed, to obtain a finished product of a lithium-sulfur battery.

The present disclosure further provides an electric device, comprising the lithium-sulfur battery.

In some embodiments, the electric device of the present disclosure includes but is not limited to, a backup power supply, a motor, an electric vehicle, an electric motorcycle, a power-assisted bicycle, a bicycle, an electric tool, and large household storage batteries, etc.

Hereinafter, some embodiments of the present disclosure will be further described with reference to the accompanying drawings and specific embodiments, so that a person skilled in the art could better understand some embodiments of the present disclosure and implement same, but the embodiments listed are not intended to limit some embodiments of the present disclosure.

Unless specially illustrated, experimental methods used in the following embodiments are all conventional methods; and unless specially illustrated, materials, reagents and the like used can all be obtained commercially.

### Embodiment 1

### 1. Synthesis of modified polypropylene

75 kg of high-molecular polypropylene (having an number-average molecular weight of 500,000) was first dissolved in 80 kg of toluene, and then 25 kg of Lewis acid, boron trifluoride diethyl etherate and 5 kg of tert-butyl benzoyl peroxide initiator were added, the temperature was controlled to be 110°C, a grafting reaction was performed, and after the reaction was performed for 3 h, a product, i.e. modified polypropylene was obtained.

### 2. Preparation of a separator of a lithium-sulfur battery

4 kg of t-butyl hydroquinone (antioxidant), 8 kg of 2,4-dihydroxybenzophenone (anti-ultraviolet agent), 1 kg of sodium octadecyl quaternary ammonium (antistatic agent) and 2 kg of lauric acid (anti-fogging agent) were mixed uniformly. The modified polypropylene and the described mixture were fed through feeding ports of an extruder respectively, and heated and melted in the extruder, to extrude a cast film, wherein the extrusion temperature was 220°C, and the extrusion speed was 1200 g/min. The extrudate was subjected to piece casting and longitudinal stretching to obtain a thin film. Then, the thin film was successively soaked in a first extraction agent (a mixture consisting of dichloromethane and trimethyl phosphate at a weight ratio of 22:1) and a second extraction agent (high-purity water) for 12 h, and dried by using an air gun, to obtain a separator of a lithium-sulfur battery.

### Embodiment 2

Embodiment 2 differs from Embodiment 1 in that: raw materials of the modified polypropylene comprises the following components by weight ratio: 78 kg of high-molecular polypropylene and 22 kg of boron trifluoride diethyl etherate; and the temperature of the grafting reaction was controlled at 125°C, and the reaction was performed for 2 h.

### Embodiment 3

Embodiment 3 differs from Embodiment 1 in that: raw materials of the modified polypropylene comprises the following components by weight ratio: 80 kg of high-molecular polypropylene and 20 kg of boron trifluoride diethyl etherate; and the temperature of the grafting reaction was controlled at 140°C, and the reaction was performed for 1 h.

### Embodiment 4

Embodiment 4 differs from Embodiment 1 in that: raw materials of the modified polypropylene comprises the following components by weight ratio: 80 kg of high-molecular polypropylene and 20 kg of boron trifluoride methyl ether; and the temperature of the grafting reaction was controlled at 140°C, and the reaction was performed for 1 h.

### Comparative Embodiment 1

The difference between Comparative Embodiment 1 and Embodiment 1 lied in that the lithium-sulfur battery separator is an ordinary polypropylene separator.

### Comparative Embodiment 2

Comparative Embodiment 2 differs from Embodiment 1 in that: a preparation method for modified polypropylene comprises: 80 kg of polypropylene was dissolved in toluene, the temperature was controlled at 140°C, and stirring was performed for 1 hour.

### Comparative Embodiment 3

Comparative embodiment 3 relates to a coating separator. A specific preparation method therefor comprises: 20 kg of boron trifluoride diethyl etherate and 30 kg of PVDF powder were dissolved in an appropriate amount of NMP to formulate a coating slurry, and the coating slurry was coated on the surface of a polypropylene separator, wherein the thickness of a base film was 10 µm, and after the coating layer was baked, the thickness of the coating layer after drying plus the thickness of the base film was about 18.5 µm in total.

### 1. Preparation of a lithium-sulfur battery

(1) a sulfur-carbon composite material (prepared by sublimed sulfur and CNT), a conductive agent SP and a binder PVDF were mixed according to a mass ratio of 7:2:1 and stirred, then, an NMP solvent was added and mixed uniformly to prepare a cathode slurry; and the cathode slurry was uniformly coated at a certain ratio on an aluminum foil coated with a conductive carbon layer, vacuum drying was performed at 80-120 °C to obtain a cathode material coated with an active material layer, and by means of a punching machine, a cathode plate was obtained.
(2) The cathode plate, a separator and an anode plate (lithium metal plate) were assembled together to form a battery, wherein the separator needs to completely wrap the cathode plate and the anode plate. An electrolyte was injected into the battery to obtain a lithium-sulfur battery; wherein a lithium salt in the electrolyte had a concentration of 1.0 mol/L of lithium bis(trifluoromethanesulfonyl)imide, and the solvent was a mixed solvent composed of 1,3-dioxolane and ethylene glycol dimethyl ether at a volume ratio of 1:1.

### 2. Tests of separator

The thickness of the separator was measured; a micropore structure of the separator was observed by using a scanning electron microscope, and the pore diameter was measured; the porosity of the battery separator was measured by using a pressure pump instrument; the air permeability of the battery separator was measured by using an air permeability tester; the longitudinal tensile strength and the lateral tensile strength of the battery separator were measured by using a tensile tester; and the puncture strength of the battery separator was measured by using an electronic tensile machine.

### 3. Cycle performance test

At 25±2 °C, the battery was charged to 4.0 V under a 1 C constant current and a constant voltage, with a cut-off current being 0.05C; and the battery stood still for 60 min, then was discharged to 2.0 V at 1 C, the process continued until the capacity decayed to 80% of the initial capacity, and the number of cycles was recorded.

Table 1 relates to parameters and cycle test results of the separators and batteries in the Embodiments and Comparative Embodiments.

**Table 1**

| | Pore diamet er /nm | Thic kne ss /µm | Por osit y /% | Air permea bility /sec/100 mL | Longitu dinal tensile strength /kgf/cm² | Punctu re strengt h /gf | Capacity retention rate after 300 cycles (mAh) |
|---|---|---|---|---|---|---|---|
| Embodiment 1 | 79-87 | 17.7 | 36.9 | 322 | 1619 | 384 | 1082 |
| Embodiment 2 | 81-90 | 18.1 | 36.4 | 326 | 1635 | 388 | 1127 |
| Embodiment 3 | 81-92 | 18.4 | 36.1 | 329 | 1663 | 391 | 1173 |
| Embodiment 4 | 81-92 | 18.4 | 36.2 | 328 | 1660 | 388 | 1167 |
| Comparative Embodiment 1 | 75-84 | 18.5 | 36.8 | 317 | 1603 | 383 | 931 |
| Comparative Embodiment 2 | 75-84 | 18.5 | 36.7 | 319 | 1604 | 383 | 929 |
| Comparative Embodiment 3 | / | 18.5 | / | / | / | / | 1035 |

It could be determined from Table 1 that compared with Comparative Embodiment 1, the separators of Embodiments 1-3 had certain improvements in terms of aspects such as pore diameter, thickness, porosity, air permeability, longitudinal tensile strength and puncture strength. Furthermore, the lithium-sulfur battery assembled with the separator of Embodiment 3 has a capacity retention rate of 1173 mAh after 300 cycles, which was much higher than 931 mAh of Comparative Embodiment 1, which indicated that the functional separator in some embodiments of the present disclosure had the effect of preventing shuttling of lithium polysulfides.

In Comparative Embodiment 2, during the process of synthesizing modified polypropylene, no Lewis acid, i.e. boron trifluoride diethyl etherate was added, and therefore boron trifluoride diethyl etherate having adsorption and catalytic effects on polysulfides cannot be introduced into polypropylene molecules; and the performance of the separator prepared in this Comparative Embodiment was substantially similar to that in Comparative Embodiment 1.

Comparative Embodiment 3 related to a coating separator, in which boron trifluoride diethyl etherate was loaded on the surface of the separator by means of coating, so that the separator had the effect of preventing shuttling of lithium polysulfides, and therefore the capacity retention rate after 300 cycles reached 1035 mAh, which was higher than that in Comparative Embodiments 1-2, but still lower than that in Embodiments 1-3.

The embodiments above are only preferred embodiments for sufficiently illustrating some embodiments of the present disclosure, and the scope of protection of some embodiments of the present disclosure is not limited thereto. The scope of protection of the present disclosure shall be subject to the appended claims.

## Claims

1. A preparation method for modified polypropylene, comprising the following steps:
dissolving polypropylene in a solvent; and
adding a Lewis acid and an initiator into the solution in which the polypropylene is dissolved, and then performing a grafting reaction, to obtain the modified polypropylene;
wherein the Lewis acid is selected from at least one of boron trifluoride diethyl etherate, boron trifluoride methyl ether, boron trifluoride acetic acid and boron trifluoride propionic acid; and the initiator is an organic peroxide initiator;
the initiator is selected from at least one of tert-butyl benzoyl peroxide and methyl ethyl ketone peroxide.

2. The preparation method for modified polypropylene according to claim 1, wherein the solvent is selected from at least one of toluene and xylene;
and/or, the temperature of the grafting reaction is 110-140 °C, and the time is 1-3 h;
and/or, the mass ratio of the polypropylene, the Lewis acid and the initiator is 75-80:20-25:5-8.

3. Modified polypropylene, prepared by the preparation method of claim 1 or 2.

4. A preparation method for a separator, comprising the following steps:
melt-mixing the modified polypropylene according to claim 3 and functional additives, and extruding a cast film;
successively performing piece casting and longitudinal stretching on the cast film, to obtain a thin film; and
extracting the thin film by using an extraction agent, and performing drying, to obtain the separator.

5. The preparation method for a separator according to claim 4, wherein the functional additives include at least one of an antioxidant, an anti-ultraviolet agent, an antistatic agent and an anti-fogging agent;
and/or the antioxidant is selected from at least one of dibutyl hydroxy toluene and t-butyl hydroquinone;
and/or the anti-ultraviolet agent is selected from at least one of salicylates, benzophenones, benzotriazoles, substituted acrylonitriles, triazines and hindered amines;
and/or the antistatic agent is selected from at least one of quaternary ammonium salts and ethoxyalkylated aliphatic alkylamines;
and/or the anti-fogging agent is selected from at least one of xylitol ester, sorbitol monopalmitate, lauric acid and Span-series surfactants.

6. The preparation method for a separator according to claim 4, wherein the extraction agent comprises a first extraction agent and a second extraction agent, and the thin film is extracted by sequentially using the first extraction agent and the second extraction agent;
wherein the first extraction agent is a mixture of dichloromethane and phosphate, and the second extraction agent is water.

7. The preparation method for a separator according to claim 6, wherein the mass ratio of dichloromethane to phosphate in the first extraction agent is 12:1-38:1;
and/or the phosphate is selected from at least one of trimethyl phosphate and triethyl phosphate.

8. A separator, prepared by using the preparation method for a separator according to any one of claims 4-7.

9. The separator according to claim 8, wherein the separator has a thickness of 10-20 µm, porosity of 35-50%, and air permeability of 300-350 sec/100 mL;
and/or the separator has a longitudinal tensile strength of 142.196 to 181.423 MPa (1450-1850 kgf/cm²) and a puncture strength of 2.94 to 3.92 (300-400 gf), wherein the tensile strength and the puncture strength are measured as indicated in the description.

10. A lithium-sulfur battery, comprising the separator according to claim 8 or 9, or comprising a separator prepared by the preparation method according to any one of claims 4-7.

## Patentansprüche

1. Herstellungsverfahren für modifiziertes Polypropylen, umfassend die folgenden Schritte:
Auflösen von Polypropylen in einem Lösungsmittel; und
Zugeben einer Lewis-Säure und eines Initiators in die Lösung, in der das Polypropylen aufgelöst ist, und anschließendes Durchführen einer Pfropfreaktion, um das modifizierte Polypropylen zu erhalten;
wobei die Lewis-Säure aus mindestens eines von Bortrifluorid-Diethyletherat, Bortrifluorid-Methylether, Bortrifluorid-Essigsäure und Bortrifluorid-Propionsäure ausgewählt ist; und der Initiator ein organischer Peroxidinitiator ist;
der Initiator aus mindestens eines von tert-Butylbenzoylperoxid und Methylethylketonperoxid ausgewählt ist.

2. Herstellungsverfahren für modifiziertes Polypropylen nach Anspruch 1, wobei das Lösungsmittel aus mindestens einem von Toluol und Xylol ausgewählt ist;
und/oder die Temperatur der Pfropfreaktion 110-140 °C beträgt und die Zeit 1-3 h beträgt;
und/oder das Massenverhältnis des Polypropylens, der Lewis-Säure und des Initiators 75-80 : 20-25 : 5-8 beträgt.

3. Modifiziertes Polypropylen, das durch das Herstellungsverfahren nach Anspruch 1 oder 2 hergestellt ist.

4. Herstellungsverfahren für einen Abscheider, umfassend die folgenden Schritte:
Schmelzmischen des modifizierten Polypropylens nach Anspruch 3 und funktioneller Additive und Extrudieren einer Gießfolie;
aufeinanderfolgendes Durchführen von Stückgießen und Längsstrecken an der Gießfolie, um eine dünne Folie zu erhalten; und
Extrahieren der dünnen Folie durch Verwenden eines Extraktionsmittels und Durchführen eines Trocknens, um den Abscheider zu erhalten.

5. Herstellungsverfahren für einen Abscheider nach Anspruch 4, worin die funktionellen Additive mindestens eines von einem Antioxidationsmittel, einem Anti-Ultraviolett-Mittel, einem Antistatikmittel und einem Anti-Beschlagmittel einschließen;
und/oder das Antioxidationsmittel aus mindestens einem von Dibutylhydroxytoluol und t-Butylhydrochinon ausgewählt ist;
und/oder das Anti-Ultraviolett-Mittel aus mindestens einem von Salicylaten, Benzophenonen, Benzotriazolen, substituierten Acrylonitrilen, Triazinen und gehinderten Aminen ausgewählt ist;
und/oder das Antistatikmittel aus mindestens einem von quaternären Ammoniumsalzen und ethoxyalkylierten aliphatischen Alkylaminen ausgewählt ist;
und/oder das Antibeschlagmittel aus mindestens eines von Xylitester, Sorbitolmonopalmitat, Laurinsäure und Span-Serie-Tensiden ausgewählt ist.

6. Herstellungsverfahren für einen Abscheider nach Anspruch 4, worin das Extraktionsmittel ein erstes Extraktionsmittel und ein zweites Extraktionsmittel umfasst, und die dünne Folie durch sequenzielles Verwenden des ersten Extraktionsmittels und des zweiten Extraktionsmittels extrahiert wird;
wobei das erste Extraktionsmittel eine Mischung aus Dichlormethan und Phosphat ist und das zweite Extraktionsmittel Wasser ist.

7. Herstellungsverfahren für einen Abscheider nach Anspruch 6, wobei das Massenverhältnis von Dichlormethan zu Phosphat in dem ersten Extraktionsmittel 12 : 1-38 : 1 beträgt;
und/oder das Phosphat aus mindestens einem von Trimethylphosphat und Triethylphosphat ausgewählt ist.

8. Abscheider, der durch Verwenden des Herstellungsverfahrens für einen Abscheider nach einem der Ansprüche 4 bis 7 hergestellt ist.

9. Abscheider nach Anspruch 8, wobei der Abscheider eine Dicke von 10-20 µm, eine Porosität von 35-50 % und eine Luftdurchlässigkeit von 300-350 sec/100 mL aufweist;
und/oder der Abscheider eine Längszugfestigkeit von 142,196 bis 181,423 MPa (1450-1850 kgf/cm²) und eine Durchstoßfestigkeit von 2,94 bis 3,92 N (300-400 gf) aufweist, wobei die Zugfestigkeit und die Durchstoßfestigkeit wie in der Beschreibung angegeben gemessen werden.

10. Lithium-Schwefel-Batterie, umfassend den Abscheider nach Anspruch 8 oder 9, oder umfassend einen Abscheider, der durch das Herstellungsverfahren nach einem der Ansprüche 4 bis 7 hergestellt ist.

## Revendications

1. Procédé de préparation de polypropylène modifié, comprenant les étapes suivantes :
dissoudre du polypropylène dans un solvant ; et
ajouter un acide de Lewis et un initiateur dans la solution dans laquelle le polypropylène est dissous, puis effectuer une réaction de greffage, pour obtenir le polypropylène modifié ;
dans lequel l'acide de Lewis est choisi parmi au moins l'un parmi trifluorure de bore éther diéthylique, trifluorure de bore éther méthylique, trifluorure de bore acide acétique et trifluorure de bore acide propionique ; et l'initiateur est un initiateur de peroxyde organique ;
l'initiateur est choisi parmi au moins l'un parmi peroxyde de tert-butyle et de benzoyle et peroxyde de méthyléthylcétone.

2. Procédé de préparation de polypropylène modifié selon la revendication 1, dans lequel le solvant est choisi parmi au moins l'un parmi toluène et xylène ;
et/ou, la température de la réaction de greffage est comprise entre 110 et 140 °C, et la durée est comprise entre 1 et 3 h ;
et/ou, le rapport de masse du polypropylène, de l'acide de Lewis et de l'initiateur est de 75-80:20-25:5-8.

3. Polypropylène modifié, préparé selon le procédé de préparation selon la revendication 1 ou 2.

4. Procédé de préparation d'un séparateur, comprenant les étapes suivantes :
mélanger par fusion le polypropylène modifié selon la revendication 3 et les additifs fonctionnels, et extruder un film moulé ;
effectuer successivement un moulage en pièces et un étirement longitudinal sur le film moulé, afin d'obtenir un film mince ; et
extraire la couche mince à l'aide d'un agent d'extraction, et procéder au séchage, afin d'obtenir le séparateur.

5. Procédé de préparation d'un séparateur selon la revendication 4, dans lequel les additifs fonctionnels comportent au moins l'un parmi antioxydant, agent anti-ultraviolet, agent antistatique et agent antibuée ;
et/ou l'antioxydant est choisi parmi au moins l'un parmi dibutylhydroxy-toluène et t-butylhydroquinone ;
et/ou l'agent anti-ultraviolet est choisi parmi au moins l'un parmi salicylates, benzophénones, benzotriazoles, acrylonitriles substitués, triazines et amines encombrées ;
et/ou l'agent antistatique est choisi parmi au moins l'un parmi sels d'ammonium quaternaire et alkylamines aliphatiques éthoxyalkylées ;
et/ou l'agent antibuée est choisi parmi au moins l'un parmi ester de xylitol, monopalmitate de sorbitol, acide laurique et agents tensioactifs de la série Span.

6. Procédé de préparation d'un séparateur selon la revendication 4, dans lequel l'agent d'extraction comprend un premier agent d'extraction et un second agent d'extraction, et le film mince est extrait en utilisant séquentiellement le premier agent d'extraction et le second agent d'extraction ;
dans lequel le premier agent d'extraction est un mélange de dichlorométhane et de phosphate, et le second agent d'extraction est de l'eau.

7. Procédé de préparation d'un séparateur selon la revendication 6, dans lequel le rapport de masse entre le dichlorométhane et le phosphate dans le premier agent d'extraction est de 12:1-38:1 ;
et/ou le phosphate est choisi parmi au moins l'un parmi phosphate de triméthyle et phosphate de triéthyle.

8. Séparateur préparé à l'aide du procédé de préparation d'un séparateur selon l'une quelconque des revendications 4 à 7.

9. Séparateur selon la revendication 8, dans lequel le séparateur a une épaisseur comprise entre 10 et 20 µm, une porosité comprise entre 35 et 50 %, et une perméabilité à l'air comprise entre 300 et 350 sec/100 mL ;
et/ou le séparateur a une résistance à la traction longitudinale comprise entre 142,196 et 181,423 MPa (1 450 à 1 850 kgf/cm²) et une résistance à la perforation comprise entre 2,94 et 3,92 N (300 à 400 gf), la résistance à la traction et la résistance à la perforation étant mesurées comme indiqué dans la description.

10. Batterie au lithium-soufre, comprenant le séparateur selon la revendication 8 ou 9, ou comprenant un séparateur préparé selon le procédé de préparation selon l'une quelconque des revendications 4 à 7.
